# EUROPEAN PATENT SPECIFICATION

(11) **EP 4 023 406 B1**
(45) Date of publication and mention of the grant of the patent: **12.03.2025**
(21) Application number: 20425063.3
(22) Date of filing: 30.12.2020
(51) Int. Cl.: B28C 7/04, B01F 33/80, B01F 35/21, G01G 13/02

(54) **A METHOD FOR UPDATING AN EXISTING MIXING PLANT**
VERFAHREN ZUM NACHRÜSTEN EINER BESTEHENDEN MISCHANLAGE
MÉTHODE DE MISE À NIVEAU D'UNE INSTALLATION DE MÉLANGE EXISTANTE

(43) Date of publication of application: 06.07.2022
(73) Proprietor: Tecno S.r.l., 80121 Napoli (IT)
(72) Inventor: Lombardi, Giovanni, 80121 Napoli (IT); Camerlingo, Giuseppe, 83053 Sant'Andrea di Conza (Avellino) (IT); Zanfardino, Angelo, 80040 Striano (Napoli) (IT); Beneduce, Mauro, 80048 Sant'Anastasia (Napoli) (IT)
(74) Representative: Tansini, Elio Fabrizio

(56) References cited:
- EP-A1- 0 353 197
- EP-B1- 0 353 197
- CN-U- 207 263 282
- JP-A- H0 626 912
- JP-B1- S 512 833
- US-A- 4 222 448

## Description

The present invention relates to a method for updating an existing mixing plant.

The term mixing plant means any type of plant for the production of specific mixtures, such as concrete mixtures defined by different percentages of material with different particle sizes. The term mixing plant can also be understood as a plant for food production such as coffee, fruit, and the like.

Furthermore, the term mixing plant means old plants which are now obsolete.

In particular, for the aforementioned mixing plants there is a need to know and monitor the quantities of material used for preparing a certain mixture. These types of systems, generally provided with a plurality of hoppers (or silos) arranged on a collection device provided with a load cell, are driven through electromechanical systems which control the opening and closing of the various hoppers (one at a time) by making material flow onto the collection device in a stationary position.

For example, if the collection device is a conveyor belt, the process stops the instant the load cell under the belt returns a predetermined weight.

At this point the belt starts transporting the material to the next preparation step.

However, when the plants are obsolete, they are not provided with data acquisition and storage systems, either locally or remotely.

For this reason, in obsolete systems it is impossible to automatically record the actual consumption of the materials unloaded by each hopper.

Furthermore, in such plants it is impossible to check for any anomalies without precise data.

Furthermore, there is the impossibility of local and/or remote monitoring of the correct operation of the system.

It should also be noted that the systems can work both through piloting through the load cell (and therefore with preset dosages and recipes), and manually (always through the load cell) for the creation of mixtures by the operator.

For this reason, at least for those plants in which the measurement occurs only on the total mixture through the load cell and/or which are not updated with modern monitoring systems, the control and storage of the weights carried out represent a real need to know the quantities of material used.

Furthermore, a similar problem arises for those plants in which a collection tank provided with a load cell is used.

EP 0 353 197 A1 discloses a mixing plant comprising:
- a collection device provided with a load cell for measuring a quantity of material introduced on or into said collection device;
- a plurality of hoppers or silos configured to release a quantity of material on or into said collection device;
wherein said mixing plant is controlled by a computer.

The technical task of the present invention is thus to make available a method for updating an existing mixing plant which is able to overcome the prior-art drawbacks which have emerged.

The object of the present invention is therefore to provide a method for updating an existing mixing plant which makes it possible to know the actual consumption of the various materials unloaded by each individual hopper.

A further object of the present invention is therefore to provide a method for updating an existing mixing plant which allows the correct operation of the system to be monitored locally and remotely.

The specified technical task and the specified aims are substantially achieved by method for updating an existing mixing plant according to claim 1. dependent claims correspond to possible embodiments of the invention.

In particular, the specified technical task and the specified aims are substantially achieved by a method for updating an existing mixing plant, for example for mixing concrete, comprising a collection device provided with a load cell and a plurality of hoppers or silos configured for releasing a quantity of material on or into said collection device. The updating system comprises a reading device connectable to the load cell and configured to read a measurement of the load cell and generate a load signal, a DIO (digital input output) converter connectable to each hopper or silo and configured to read an open or closed state of each hopper or silo and send an open or closed signal of each hopper or silo, a datalogger configured to receive, process and store the load signals and the open or closed signals of each hopper or silo, and a communication system configured to send the signals processed and stored by the datalogger to a server.

Further characteristics and advantages of the present invention will more fully emerge from the indicative, and thus non-limiting description of a preferred but not exclusive embodiment of a method for updating an existing mixing plant.

Such a description will be set out hereinafter with reference to the accompanying drawings given only for illustrative and, therefore, non-limiting purpose, in which:
- Figure 1 is a schematic representation of an updating system installed in a mixing plant;
- Figure 2 is a schematic representation of a result of the monitoring method.

With reference to the accompanying figures, 1 refers overall to an updating system for a mixing plant 10 which, for the sake of disclosure simplicity, will be indicated hereinafter as updating system 1.

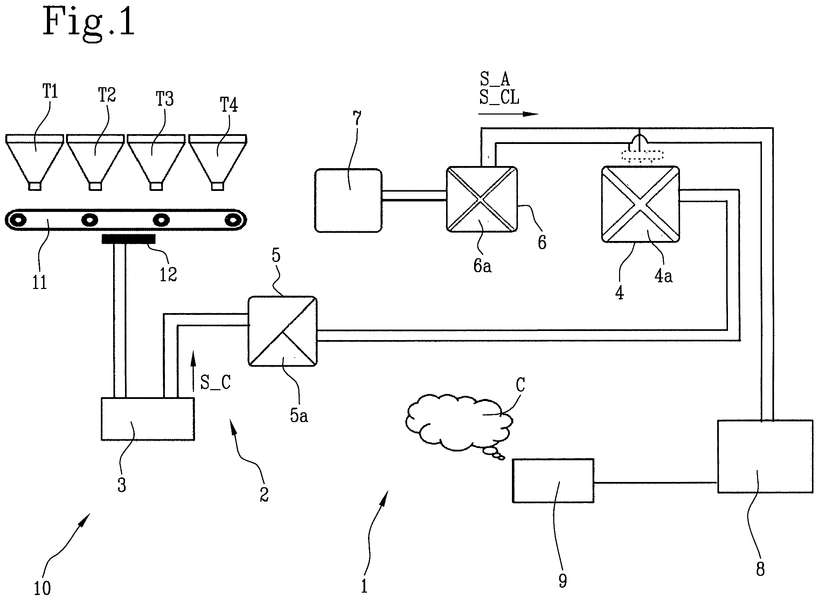

In particular, as depicted in figure 1, the mixing plant 10 comprises a collection device 11 (e.g., a conveyor belt) provided with a load cell 12 and a plurality of hoppers (for example, four hoppers "T1", "T2", "T3" and "T4" are depicted in figure 1) configured for releasing a quantity of material on or into said collection device 11.

In the present disclosure, only the hoppers "T1", "T2", "T3" and "T4" are mentioned, for the sake of disclosure simplicity, but the mixing plant 10 may be provided with silos configured for releasing material through augers.

The mixing plant 10 may be, for example, a concrete mixing plant. The mixing plant 10 may be configured for mixing other similar products.

The updating system 1 which will be described below is therefore installed in a mixing plant 10 which is now obsolete and would not basically allow the operations performed by the updating system 1 itself.

The updating system 1 comprises a reading device 2 connectable to the load cell 12 and configured to read a measurement of the load cell and generate a load signal "S_C".

In other words, the load cell 12 is configured to measure a load of material deposited by the hoppers "T1", "T2", "T3" and "T4" on the collection device 11 and the reading device 2 is configured to read and convert said measurement into a respective load signal "S_C".

Preferably, and as depicted in figure 1, the reading device 2 comprises a converter 3 for the load cell 12 connectable to the load cell 12 and configured to read the aforementioned measurement, convert it into the load signal "S_C" to be sent. The reading device 2 further comprises an AD converter 4 (analog-to-digital converter) configured to receive the load signal "S_C" and convert it. Preferably, the AD converter 4 comprises a power supply 4a or a connection to the mains.

Preferably, the reading device 2 further comprises an isolator 5 configured to receive and isolate the load signal "S_C" so as to eliminate disturbances in the measurement of the load cell 12. Preferably, the isolator 5 comprises a power supply 5a or a connection to the mains.

The updating system 1 further comprises a DIO (digital input output) converter 6 connectable to each hopper "T1", "T2", "T3" and "T4" and configured to read an open or closed state of each hopper "T1", "T2", "T3" and "T4". Thereby, the DIO converter 6 is configured to generate and send an open signal "S_A" or closed signal "S_CL" of each hopper "T1", "T2", "T3" and "T4".

That is, the DIO converter 6 is connectable to an opening relay 7 of the various hoppers "T1", "T2", "T3" and "T4" so as to know the configuration of the hoppers "T1", "T2", "T3" and "T4" (if open or closed) at any time.

Preferably, the DIO converter 6 comprises a power supply 6a or a connection to the mains.

The updating system 1 further comprises a datalogger 8 configured to receive, process and store the load signals "S_C" and the open signals "S_A" or closed signals "S_CL" of each hopper "T1", "T2", "T3" and "T4". The datalogger 8 is preferably configured to acquire the signals "S_C", "S_A" and "S_CL" in a continuous cycle.

The datalogger 8 is configured to acquire signals with a frequency of four acquisitions per second.

The datalogger 8 is therefore to be understood as a data acquisition and management device, as will become clearer in the following description. In particular, the datalogger 8 is configured to define an association between the load signal "S_C" and the open and closed signals "S_A" and "S_CL" of each individual hopper "T1", "T2", "T3" and "T4" in order to precisely know the individual quantities of material released by each hopper during one or more production cycles of the specific mixture.

The updating system 1 further comprises a communication system 9 configured to send the signals "S_C", "S_A" and "S_CL" processed and stored by the datalogger 8 to a server "C".

The communication system 9 is a system capable of sending the signals "S_C", "S_A" and "S_CL" through a wireless communication. Preferably, the communication system 9 may be implemented in the form of a 4G modem.

Preferably, the updating system 1 further comprises a user interface device (not illustrated) communicating with the server "C" and configured for displaying the stored signals in real time or as final and/or for sending an alarm signal to a user based on the processed and stored signals "S_C", "S_A" and "S_CL".

That is, by means of the user interface device (such as a smartphone, a personal computer or other dedicated device) a user (such as a plant operator) is able to view in real time the weights of the individual hoppers "T1", "T2", "T3" and "T4" so as to know the quantity of material consumed therein (i.e., deposited on the collection device 11) and in what percentage of the total mixture weight.

Furthermore, the user is able to know if there are errors in the material released by the hoppers "T1", "T2", "T3" and "T4" by receiving alarm signals if certain thresholds are exceeded. That is, if the signals "S_C", "S_A" and "S_CL" show a quantity of material which is above or below a certain threshold, the updating system 1 would be able to warn the user who could therefore promptly intervene.

In a use configuration of the updating system 1, the load signal "S_C" coming from the load cell 12 is read by the converter 3. The isolator 5 has the function of isolating the load signal "S_C" read by the load cell 12 so as not to introduce disturbances on the correct reading of the latter.

Once the load signal "S_C" has been isolated, it is sent to the AD converter 4 which, through a high frequency reading by the datalogger 8, will reconstruct a load trend measured by the load cell 12.

In parallel, the opening relays 7 of the various hoppers "T1", "T2", "T3" and "T4" are connected to the DIO converter 6, also interrogated at high frequency by the datalogger 8 so as to know the position of all the relays (open or closed) for each moment.

The acquired signals "S_C", "S_A" and "S_CL" are therefore processed by the datalogger 8 and then sent to the server "C" by the communication system 9.

Advantageously, the updating system 1 described above is easy to install and allows the updating of an obsolete mixing plant 10. Thereby, it is possible to obtain the same results in terms of monitoring as would be obtained from new generation plants.

The present disclosure also relates to a mixing plant 10, for example for mixing concrete, comprising a collection device 11 provided with a load cell 12 for measuring a quantity of material introduced into the collection device 11.

The mixing plant 10 further comprises a plurality of hoppers "T1", "T2", "T3" and "T4" (or silos) configured to release a quantity of material on or into the collection device 11. Figure 1 depicts four hoppers but, depending on the type of mixture to be obtained or the mixing plant 10 itself, there may be more or less hoppers.

The mixing plant 10 further comprises an updating system 1 as previously described. In other words, the updating system 1 is installed in the mixing plant 10 which therefore from an "obsolete plant" stage is updated so as to be able to effectively monitor the preparation of the mixture by identifying the amount of material released by each hopper "T1", "T2", "T3" and "T4".

Preferably, the collection device 11 is made in the form of a conveyor belt (e.g., as depicted in figure 1) defining a material collection surface. In such a configuration the plurality of hoppers "T1", "T2", "T3" and "T4" are arranged along the conveyor belt for the sequential release of a quantity of material thereon. That is, the hopper "T1" will be the first hopper to release material onto the collection device 11 and will be followed, once this operation is completed, by the hopper "T2", followed by the hopper "T3" and finally by the hopper "T4".

Preferably, the collection device 11 is made in the form of a collection tank (not shown). In such a configuration, each hopper "T1", "T2", "T3" and "T4" is arranged or available near the collection tank for the sequential release of a quantity of material. That is, the hoppers "T1", "T2", "T3" and "T4" are configured to release, one at a time, a certain quantity of material inside the collection device 11.

Advantageously, the presence of the updating system 1 makes the mixing plant 10 (which is to be understood as an originally obsolete plant) able to obtain an effective and accurate monitoring of the quantity of material released by each single hopper "T1", "T2", "T3" and "T4" in order to ensure a relationship between the different materials defining the mixture which is the desired and therefore correct relationship.

Furthermore, the updating system 1 allows a real-time or final monitoring, so as to know the performance of the mixing plant 10 at any time in order to identify possible anomalies and be able to promptly intervene.

The present disclosure further relates to a monitoring method for a mixing plant 10.

The monitoring method is to be understood as feasible by means of the updating system 1 described previously (i.e., by the different components which compose it) or feasible in a mixing plant 10 as previously described (and therefore provided with the updating system 1 capable of removing the obsolete plant condition therefrom).

The monitoring method is also to be understood as an algorithm or part of an algorithm performed by the updating system 1 in order to accurately calculate the weights of the various hoppers "T1", "T2", "T3" and "T4" (or silos).

That is, the monitoring method may also be understood as a method of using or applying the updating system 1.

The monitoring method comprises a first step of starting plant monitoring when a load is released on or into the collection device 11. That is, the method involves starting monitoring when a load threshold value "INF" is exceeded. The threshold value "INF" is to be considered a zero load value or a condition in which the load cell 12 does not measure any load on the collection device 11. Once this threshold value "INF" has been exceeded, the monitoring cycle of the mixing plant 10 begins by way of the updating system 1.

The monitoring method involves generating a load signal related to a load quantity released onto the collection device 11. In other words, as described above, when a load is released by the hoppers "T1", "T2", "T3" and "T4" on the collection device 11, the load cell 12 measures the deposited load and the reading device 2 reads such a measurement and converts it into a load signal "S_C" which is sent to the datalogger 8.

At the same time, the method includes generating an open signal "S_A" and a closed signal "S_CL" for each hopper of the mixing plant 10 as a function of an opening and closing of the respective hoppers "T1", "T2", "T3" and "T4". That is, as previously described, when the hoppers open and close by way of the relay 7, the DIO converter 6 reads such an opening and closing and generates the respective open signals "S_A" and closed signals "S_CL" and sends them to the datalogger 8.

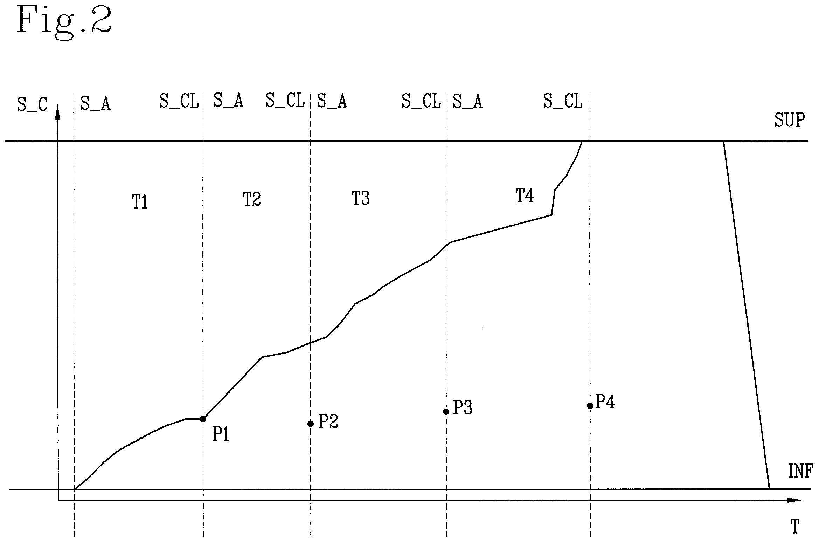

The monitoring method therefore involves processing the load signal "S_C" as a function of the open and closed signals "S_CL" of each hopper "T1", "T2", "T3" and "T4" so as to determine a relative weight ("P1", "P2", "P3" and "P4" in figure 2) of material released on or into the collection device 11 by each hopper "T1", "T2", "T3" and "T4".

Preferably, the processing step (generally performed by the datalogger 8) involves defining a load curve such as that shown in figure 2. The load curve is defined as a function of the load signals "S_C" related to the load quantities released onto the collection device 11 in a cycle time "T".

A load curve sampling step follows as a function of the open signal "S_A" and the subsequent closed signal "S_CL" for each hopper "T1", "T2", "T3" and "T4". In figure 2, the open signal "S_A" of a hopper coincides with the closed signal "S_CL" of the previous hopper. Nevertheless, the open signal "S_A" of a hopper and the closed signal "S_CL" of the previous hopper may not coincide with each other depending on how the mixing plant 10 is structured and therefore on the timing with which the hoppers "T1", "T2", "T3" and "T4" release material on or into the collection device 11.

A step of calculating the contribution of each hopper in defining the load curve as a function of the aforementioned sampling follows. That is, from the calculation step the relative weights "P1", "P2", "P3" and "P4" depicted in figure 2 are defined.

Preferably, the calculation step is accomplished by defining a load difference in the respective sequential samplings of the hoppers "T1", "T2", "T3" and "T4". That is, a load difference between one sampling and the other is calculated. It is thereby possible to know the relative weights "P1", "P2", "P3" and "P4" which contribute to the definition of the mixture for each hopper "T1", "T2", "T3" and "T4". The difference for the first hopper "T1" is defined by the actual quantity of material measured by the load cell 12. That is, from the sampling of the first hopper "T1", the relative weight "P1" is defined by the load signal "S_C" measured at the moment in which the closed signal "S_CL" of the first hopper "T1" is received subtracted from the zero threshold value "INF".

For the hopper "T2", in a completely similar way, the relative weight "P2" is calculated by subtracting from the load signal "S_C" measured at the instant in which the closed signal "S_CL" of the second hopper "T2" is received the load signal "S_C" measured at the instant in which the closed signal "S_CL" of the first hopper "T1" is received or the load signal "S_C" measured at the instant in which the open signal "S_A" of the second hopper "T2" itself is received. This calculation shall be carried out for each sampling defined for the hoppers.

Alternatively, the relative weight "P2" is calculated by subtracting the value of "P1" from the load signal "S_C" measured at the instant in which the closed signal "S_CL" of the second hopper "T2" is received. For the subsequent hoppers, the calculation is defined by subtracting the total weight defined by the previous calculated contributions from the respective load signal "S_C".

Once the closed signal "S_CL" of the last hopper "T4" has been received, the maximum threshold value "SUP" corresponding to the maximum weight envisaged for the specific mixture to be made in the mixing plant should have been reached.

Therefore, the monitoring method includes interrupting the plant monitoring when the load is removed from the collection device 11 (and therefore brought to other areas of the mixing plant 10 where further processing will be performed). That is, the method stops monitoring when once the maximum threshold value "SUP" is reached the load is released and the condition defined by the threshold value "INF" is returned.

The processed signals "S_C", "S_A" and "S_CL" (i.e., the relative weights "P1", "P2", "P3" and "P4") are stored and sent to a server "C".

Preferably, the monitoring method also comprises a step of sending an alarm signal to a user if the processing and storage step results in different quantities of material compared to preset values. In other words, if the maximum threshold value "SUP" is exceeded or if the relative weights P1", "P2", "P3" and "P4" are different from preset threshold values, the method would involve sending an alarm signal to a user interface device of a user. Thereby, the same could become aware of anomalies in the mixing plant 10 and act promptly in order to avoid possible economic or image damage (for example for the release of a product not having certain necessary quality standards).

Furthermore, by means of the server "C" the user is able to monitor a data history relating to a plurality of monitoring cycles so as to identify possible systematic anomalies in the mixing plant 10 itself, at least with regard to the preparation step of the different materials defining the mixture.

Furthermore, by means of the user interface device, a user could view the monitoring results from a graphic point of view, obtaining information such as that shown in figure 2 for each monitoring cycle performed by the updating system 1 when installed in the mixing plant 10.

The present invention is therefore able to overcome the drawbacks arising from the prior art.

Advantageously, the present invention allows updating mixing plants 10 which are now obsolete.

Advantageously, the present invention allows to obtain real-time as well as final monitoring.

Furthermore, the present invention allows information related to the consumption of the various materials to be obtained in order to carry out checks on the prepared mixtures and to be able to discriminate therebetween.

## Claims

1. A method for updating an existing mixing plant (10) comprising:
- a collection device (11) provided with a load cell (12) for measuring a quantity of material introduced on or into said collection device (11);
- a plurality of hoppers (T1, T2, T3, T4) or silos configured to release a quantity of material on or into said collection device (11);
said method comprising a phase of installing an updating system (1) in the mixing plant (10) so as to be able to effectively monitor the preparation of the mixture by identifying the amount of material released by each hopper (T1, T2, T3, T4),
the updating system (1) comprising:
- a reading device (2) connectable to said load cell (12) and configured to read a measurement of said load cell (12) and generate a load signal (S_C);
- a DIO converter (6) connectable to each hopper (T1, T2, T3, T4) or silo and configured to read an open or closed state of each hopper (T1, T2, T3, T4) and generate an open (S_A) or closed (S_CL) signal of each hopper (T1, T2, T3, T4) or silo;
- a datalogger (8) configured to receive, process and store said load signals (S_C) and said open (S_A) or closed (S_CL) signals of each hopper (T1, T2, T3, T4); and
- a communication system (9) configured to send said signals (S_C, S_A, S_CL) processed and stored by the datalogger (8) to a server (C).

2. A method according to claim 1, wherein said reading device (2) comprises:
- a converter (3) for the load cell (12) connectable to said load cell (12) and configured to read a measurement of said load cell (12) and convert it into the load signal (S_C);
- an AD converter (4) configured to receive and convert said load signal (S_C).

3. A method according to claim 2, wherein said reading device (2) further comprises an isolator (5) configured to receive and isolate said load signal (S_C) so as to eliminate disturbances in the measurement of the load cell (12).

4. A method according to one or more of the preceding claims, wherein the updating system (1) further comprises a user interface device communicating with said server (C) and configured for the real-time or final display of said processed and stored signals (S_C, S_A, S_CL) and/or for sending an alarm signal to a user based on said processed and stored signals (S_C, S_A, S_CL).

5. A method according to one or more of the preceding claims, wherein said datalogger (8) is configured to acquire said signals (S_C, S_A, S_CL) in a continuous cycle.

6. A method according to one or more of the preceding claims, wherein said datalogger (8) is configured to acquire signals (S_C, S_A, S_CL) at a frequency of four acquisitions per second.

## Patentansprüche

1. Verfahren zum Nachrüsten einer bestehenden Mischanlage (10), umfassend:
- eine Sammelvorrichtung (11), die mit einer Wägezelle (12) zum Messen einer auf oder in die Sammelvorrichtung (11) eingeführten Menge an Material versehen ist;
- eine Vielzahl von Trichtern (T1, T2, T3, T4) oder Silos, die ausgelegt sind, um eine Menge an Material auf oder in die Sammelvorrichtung (11) freizusetzen;
wobei das Verfahren einen Schritt zum Installieren eines Nachrüstungssystems (1) in der Mischanlage (10) umfasst, um die Vorbereitung der Mischung effektiv überwachen zu können, indem die Menge von von einem jeden Trichter (T1, T2, T3, T4) freigesetzten Material identifiziert wird,
wobei das Nachrüstungssystem (1) umfasst:
- eine Lesevorrichtung (2), die mit der Wägezelle (12) verbindbar und ausgelegt ist, um eine Messung der Wägezelle (12) auszulesen und ein Lastsignal (S_C) zu erzeugen;
- einen DIO-Wandler (6), der mit einem jeden Trichter (T1, T2, T3, T4) oder Silo verbindbar und ausgelegt ist, um einen offenen oder geschlossenen Zustand eines jeden Trichters (T1, T2, T3, T4) auszulesen und ein offenes (S_A) oder geschlossenes (S_CL) Signal eines jeden Trichters (T1, T2, T3, T4) oder Silos zu erzeugen;
- einen Datenlogger (8), der dazu ausgelegt ist, die Lastsignale (S_C) und die offenen (S_A) oder geschlossenen (S_CL) Signale eines jeden Trichters (T1, T2, T3, T4) zu empfangen, zu verarbeiten und zu speichern; und
- ein Kommunikationssystem (9), das dazu ausgelegt ist, die vom Datenlogger (8) verarbeiteten und gespeicherten Signale (S_C, S_A, S_CL) an einen Server (C) zu senden.

2. Verfahren nach Anspruch 1, wobei die Lesevorrichtung (2) umfasst:
- einen Wandler (3) für die Wägezelle (12), der mit der Wägezelle (12) verbindbar und ausgelegt ist, um eine Messung der Wägezelle (12) auszulesen und sie in das Lastsignal (S_C) umzuwandeln;
- einen AD-Wandler (4), der dazu ausgelegt ist, das Lastsignal (S_C) zu empfangen und umzuwandeln.

3. Verfahren nach Anspruch 2, wobei die Lesevorrichtung (2) ferner einen Isolator (5) umfasst, der ausgelegt ist, um das Lastsignal (S_C) zu empfangen und zu isolieren, um Störungen bei der Messung der Wägezelle (12) zu eliminieren.

4. Verfahren nach einem oder mehreren der vorhergehenden Ansprüche, wobei das Nachrüstungssystem (1) ferner eine Benutzerschnittstellenvorrichtung umfasst, die mit dem Server (C) kommuniziert und zur Echtzeit- oder Endanzeige der verarbeiteten und gespeicherten Signale (S_C, S_A, S_CL) und/oder zum Senden eines Alarmsignals an einen Benutzer auf Grundlage der verarbeiteten und gespeicherten Signale (S_C, S_A, S_CL) ausgelegt ist.

5. Verfahren nach einem oder mehreren der vorhergehenden Ansprüche, wobei der Datenlogger (8) ausgelegt ist, um die Signale (S_C, S_A, S_CL) in einem kontinuierlichen Zyklus zu erfassen.

6. Verfahren nach einem oder mehreren der vorhergehenden Ansprüche, wobei der Datenlogger (8) ausgelegt ist, um Signale (S_C, S_A, S_CL) mit einer Frequenz von vier Erfassungen pro Sekunde zu erfassen.

## Revendications

1. Méthode de mise à niveau d'une installation de mélange existante (10), comprenant :
- un dispositif de collecte (11) pourvu d'un capteur à jauge (12) pour mesurer une quantité de matériau introduite sur ou dans ledit dispositif de collecte (11) ;
- une pluralité de trémies (T1, T2, T3, T4) ou de silos configurés pour libérer une quantité de matériau sur ou dans ledit dispositif de collecte (11) ;
ladite méthode comprenant une phase d'installation d'un système de mise à niveau (1) dans l'installation de mélange (10) afin de pouvoir contrôler efficacement la préparation du mélange en identifiant la quantité de matière libérée par chaque trémie (T1, T2, T3, T4),
le système de mise à niveau (1) comprenant :
- un dispositif de lecture (2) pouvant se connecter audit capteur (12) et configuré pour lire une mesure dudit capteur à jauge (12) et générer un signal de charge (S_C) ;
- un convertisseur DIO (6) pouvant se connecter à chaque trémie (T1, T2, T3, T4) ou silo et configuré pour lire un état ouvert ou fermé de chaque trémie (T1, T2, T3, T4) et générer un signal d'ouverture (S_A) ou de fermeture (S_CL) de chaque trémie (T1, T2, T3, T4) ou silo ;
- un enregistreur de données (8) configuré pour recevoir, traiter et stocker lesdits signaux de charge (S_C) et lesdits signaux d'ouverture (S_A) ou de fermeture (S_CL) de chaque trémie (T1, T2, T3, T4) ; et
- un système de communication (9) configuré pour envoyer lesdits signaux (S_C, S_A, S_CL) traités et stockés par l'enregistreur de données (8) à un serveur (C).

2. Méthode selon la revendication 1, dans laquelle ledit dispositif de lecture (2) comprend :
- un convertisseur (3) pour le capteur à jauge (12) pouvant se connecter audit capteur à jauge (12) et configuré pour lire une mesure dudit capteur (12) et la convertir en signal de charge (S_C) ;
- un convertisseur AD (4) configuré pour recevoir et convertir ledit signal de charge (S_C).

3. Méthode selon la revendication 2, dans laquelle ledit dispositif de lecture (2) comprend en outre un isolateur (5) configuré pour recevoir et isoler ledit signal de charge (S_C) de manière à éliminer les perturbations de la mesure du capteur à jauge (12).

4. Méthode selon l'une ou plusieurs des revendications précédentes, dans laquelle le système de mise à niveau (1) comprend en outre un dispositif d'interface utilisateur communiquant avec ledit serveur (C) et configuré pour l'affichage en temps réel ou final desdits signaux traités et stockés (S_C, S_A, S_CL) et/ou pour l'envoi d'un signal d'alarme à un utilisateur sur la base desdits signaux traités et stockés (S_C, S_A, S_CL).

5. Méthode selon l'une ou plusieurs des revendications précédentes, dans laquelle l'enregistreur de données (8) est configuré pour acquérir lesdits signaux (S_C, S_A, S_CL) dans un cycle continu.

6. Méthode selon l'une ou plusieurs des revendications précédentes, dans laquelle ledit enregistreur de données (8) est configuré pour acquérir les signaux (S_C, S_A, S_CL) à une fréquence de quatre acquisitions par seconde.
